Europäisches Patentamt

European Patent Office

Office européen des brevets

(19)

(11) Veröffentlichungsnummer: **0 063 301**
**B1**

(12) **EUROPÄISCHE PATENTSCHRIFT**

(45) Veröffentlichungstag der Patentschrift:
26.02.86

(21) Anmeldenummer: **82102887.5**

(22) Anmeldetag: **05.04.82**

(51) Int. Cl.⁴: **C 08 G 69/48,** C 08 G 71/02,
D 21 H 3/58

(54) Verwendung wasserlöslicher Polymere als Haftverbesserungsmittel bei der Herstellung von Kreppapier.

(30) Priorität: **16.04.81 DE 3115547**

(43) Veröffentlichungstag der Anmeldung:
**27.10.82 Patentblatt 82/43**

(45) Bekanntmachung des Hinweises auf die Patenterteilung:
**26.02.86 Patentblatt 86/9**

(84) Benannte Vertragsstaaten:
**CH DE FR GB IT LI**

(56) Entgegenhaltungen: ·
**EP - A - 0 002 475**
**DE - A - 2 656 530**
**DE - A - 2 925 567**

(73) Patentinhaber: **BAYER AG, Konzernverwaltung RP
Patentabteilung, D-5090 Leverkusen 1 Bayerwerk (DE)**

(72) Erfinder: **Schröer, Wolf-Dieter, Dr., Körnerstrasse 5,
D-5090 Leverkusen 1 (DE)**
Erfinder: **Muszik, Janos, Dr.,
Gabriele-Münter-Strasse 12, D-5090 Leverkusen 1 (DE)**
Erfinder: **Kolb, Günter, Dr.,
Heinrich-von-Kleist-Strasse 7, D-5090 Leverkusen 1 (DE)**
Erfinder: **Triebeneck, Kurt, Dr., Arnoldstrasse 3,
D-5000 Koeln 21 (DE)**
Erfinder: **Leiritz, Karl, Dr., Hofstrasse 15,
D-4019 Monheim 1 (DE)**

LIBER, STOCKHOLM 1986

## Beschreibung

Die Erfindung betrifft die Verwendung wasserlöslicher Polymere bei der Herstellung von Kreppapier, wobei dieses Kreppapier in Wasser wieder vollständig in Papierbrei zurückverwandelt oder zerkleinert werden kann, so daß derartige Materialien beispielsweise leicht in Toiletten weggespült werden können.

In der Praxis werden hauptsächlich zwei Methoden angewendet, um Papierbahnen Dehnungseigenschaften zu verleihen, die als Naß- bzw. Trockenkreppung bezeichnet werden. Eine häufig genutzte Einrichtung zur Trockenkreppung wird in der praxis Messer- oder Schaberkreppung genannt. Die Messerkreppung wird für gewöhnlich während des Trockenprozesses bei dem Papierherstellungsvorgang durchgeführt.

Der Trockenvorgang besteht darin, dem Papier eine ausreichende Wärmemenge zuzuführen, um das meiste des in dem Blatt nach dem Naßpressen verbleibenden Wassers zu verdampfen. Das Trocknen wird für gewöhnlich durch Führen des Blattes über die Oberfläche eines erhitzten Zylinders durchgeführt.

Nachdem die gewünschte Menge Wasser aus der Papierbahn entfernt wurde, wird das Papier von der Oberfläche des erhitzten Zylinders mittels eines Schabers bzw. Messers getrennt und abgenommen. Das Papier wird während seiner Trennung und Abnahme von dem erhitzten Zylinder mit Hilfe eines Messers gekreppt. Anschließend wird das gekreppte Papier auf einen Dorn in Form einer Rolle für die nachfolgende Handhabung, Lagerung und dergleichen aufgewickelt.

Beim Vorgang des Kreppens von Papier ist die Haftung des Papiers an dem erhitzten Zylinder von wesentlicher Bedeutung, Diese Haftung muß sorgfältig kontrolliert werden. Falls die Haftung nicht richtig ist, wird das Papierblatt zu leicht von der Oberfläche des Zylinders mit der Folge einer zu geringen Kreppung oder keiner Kreppung des Papiers entfernt. Bei zu starker Haftung des Blattes an dem erhitzten Zylinder wird ein wesentlicher Anteil der inneren Faserbindung während des Kreppvorganges zerrissen und zerstört, wodurch die Festigkeitseigenschaften des gekreppten Blattes wesentlich vermindert werden. In den meisten Fällen ist die Haftung der Papierbahn auf dem Zylinder ungenügend, so daß in der Praxis zur Erzielung der optimalen Kreppung Zusatzmittel erforderlich sind.

Diese Zusatzmittel sollen möglichst nicht nur die Haftung verbessern, sondern auch die Oberfläche des Trockenzylinders schonen und die Standzeit der Kreppmesser erhöhen.

Sie müssen aus diesem Grund gewisse Gleiteigenschaften haben und dürfen bei der Trockentemperatur nicht hart werden. Um die gewünschte Haftung des Papiers an der Zylinderoberfläche zu fördern, wird z.B. ein wäßriger Zusatzstoff auf die Oberfläche des erhitzten Zylinders aufgetragen. Bei einigen Verfahrensweisen zur Verbesserung der Haftung wird der Hilfsstoff entweder äußerlich oder innerlich auf das Papierblatt vor der Berührung mit der Oberfläche des erhitzten Zylinders aufgetragen. In den meisten Fällen wird zur Verbesserung der Haftung der Hilfsstoff direkt in der Papierstoffmasse vor der Blattbildung eingesetzt.

Es sind auch Hilfsmittel zur Steuerung der Haftung am Trockenzylinder vorgeschlagen worden. Ein Nachteil dieser Mittel besteht jedoch darin, daß sie dem Papier eine erhöhte Naßfestigkeit verleihen, so daß das Papier infolgedessen nicht wieder in Papierbrei zurückverwandelt werden kann und auch in den Abwassersystemen nicht licht zerfällt. Mittel zur Haftungsverbesserung gemäß US-PS 3 640 841, auf der Basis von Polyamid-Polyaminen, erhalten durch Umsetzung von Dicarbonsäuren mit Polyaminen besitzen zwar die geforderte geringe Naßfestigkeit. Es handelt sich jedoch in diesem Falle um relativ niedermolekulare Kondensate, die nur eine geringe Affinität zur Faser haben und daher in der Masse in relativ großer Menge eingesetzt werden müssen.

Es sind weiterhin Mittel auf Basis von Epichlorhydrin-Quaternierungsprodukten beschrieben worden (DE-OS 2 656 530, DE-OS 2 239 647) die nur einen geringen Naßverfestigungseffekt zeigen, da sie nur mit geringen Mengen Epichlorhydrin quaterniert wurden. Diese Mittel verlieren aber auf dem heißen Zylinder schnell ihre Klebrigkeit und werden hart. Außerdem können sich auf dem Zylinder Ablagerungen bilden, die den Herstellungsvorgang stören und das Kreppmesser beschädigen.

Die EP-A1-2475 und die DE-A-2 925 567 beschreiben die Verwendung von Polymeren als Hilfsmittel zur Erhöhung der Retention von Fasern, Füllstoffen und Pigmenten sowie zur Beschleunigung der Entwässerung bei der Papierherstellung und zur Aufarbeitung von Papiermaschinenabwässern durch Filtration, Sedimentation und Flotation. Auf die Kreppapierherstellung wird nicht eingegangen. Die genannten Verwendungszwecke stehen in keinem Zusammenhang mit der erfindungsgemäßen Verwendung von bestimmten polymeren als Haftverbesserungsmittel bei der Papierkreppung.

Weiterhin weisen die aus EP-A1-2475 und DE-A-2 925 567 bekannten polymere als 25 %ige wäßrige Lösungen bei 25 °C durchweg eine höhere Viskosität als 100 Pa.s auf, so daß sie als Krepphilfsmittel ungeeignet sind, da sie harte Filme auf dem erhitzten Trocknungszylinder bilden.

Es wurde nun gefunden, daß wasserlösliche Polymere, erhältlich durch Umsetzung eines gegebenenfalls durch Umsetzung mit Monocarbonsäure modifizierten Polyamidamins und/oder eines Polyharnstoffamins mit einer solchen Menge einer bifuntionellen Verbindung der Formel

$$X - Y - X' \qquad\qquad I$$

in welcher die Reste X und X' gleich oder verschieden sein können und für Halogen stehen und Y für gegebenenfalls durch 0, S unterbrochenes Alkylen, Cycloalkylen, Arylenalkylen, Alkylencarbonyl steht, daß die Endviskosität einer 25 %igen wäßrigen Lösung des Kondensationsprodukts bei 25°C weniger als 100 mPa.s beträgt, als Haftverbesserungsmittel bei der Papierkreppung eingesetzt werden können, welche überraschenderweise die Nachteile bisher bekannt gewordener Haftverbesserungsmittel nicht aufweisen.

In der oben stehenden Formel I stehen X und X' vorzugsweise für Chlor oder Brom, insbesondere für Chlor.

Y steht vorzugsweise für gegebenenfalls durch ein Sauerstoffatom unterbrochenes Alkylen mit 1 bis 6 Kohlenstoffatomen.

Als Verbindungen der Formel I seien beispielhaft aufgeführt:

1,2-Dichlorethan, 1,2-Dibromethan, 1,2-Dichlor-propan, 1,3-Dichlorpropan, 1,6-Dichlorhexan; ω ω'-Dihalogenether, z.B. 2,2'-Dichlor-diethylether, Bis-(ß-chlor-isopropyl)-ether, Bis-(4-chlor-butyl)-ether, Chloracetylchlorid, 2-Chlorpropionylchlorid, 3-Chlor-propionylchlorid, 3-Brom-propionylchlorid.

Besonders bevorzugt wird 1,2-Dichlorethan eingesetzt.

Die für die Herstellung der erfindungsgemäß verwendeten wasserlöslichen Polymere als Ausgangskomponente einzusetzenden Polyamidamine sind entweder bekannt oder können nach an sich bekannten Methoden hergestellt werden.

So lassen sich als Polyamidamine z.B. die aus Polyalkylenpolyaminen und Dicarbonsäuren und/oder ω-Aminocarbonsäuren oder deren Lactamen gemäß DE-PS 1 771 814 erhältlichen einsetzen. Die vorgenannten Polyamidamine lassen sich vorteilhaft vor der nachfolgenden Umsetzung mit der bifunktionellen Verbindung X-Y-X' mit Monocarbonsäuren umsetzen, wobei bis maximal die Hälfte der im Molekül vorhandenen zur Amidbildung befähigten Aminogruppen umgesetzt werden.

Als Carbonsäuren eignen sich aliphatische Monocarbonsäuren mit 1-4 C-Atomen, insbesondere Ameisensäure, Essigsäure und Propionsäure. Die Menge der zugesetzten Carbonsäuren wird so gewählt, daß wasserlösliche Kondensate erhalten werden. Bevorzugt wird Ameisensäure verwendet.

Die Umsetzung mit den Monocarbonsäuren wird bevorzugt bei 150 bis 250°C im allgemeinen zunächst unter gewöhnlichen Druck und anschließend unter vermindertem Druck durchgeführt, wobei eine der Carbonsäure äquivalente Menge Wasser abdestilliert wird.

Weitere für die Herstellung der erfindungsgemäßen wasserlöslichen Polymere einsetzbare Polyamidamine werden beispielsweise in folgenden publikationen beschrieben:

US-Patent 3 314 897, 3 320 215, 3 640 841, 3 647 763, DE-OS 2 239 647.

Als Polyharnstoffamine kommen für die Herstellung der erfindungsgemäß verwendeten wasserlöslichen Polymere insbesondere die folgenden unter a) bis c) genannten in Betracht:

a) Umsetzungsprodukte von Harnstoffen und Polyaminen, die mindestens drei Aminogruppen enthalten, von denen wenigstens eine eine tertiäre Aminogruppe it oder Mischungen dieser Polyamine. Beispielsweise seien genannt:

Methyl-bis-(3-aminopropyl)-amin, N-(2-Aminoethyl)-piperazin, 4,7-Dimethyltriethylen-tetramin, Methyl-bis-(2-aminoethyl)-amin, Ethyl-bis-(2-aminoethyl)-amin, Ethyl-bis-(3-aminopropyl)-amin, wobei die beiden erstgenannten Amine bevorzugt sind. Diese werden z.B. in der DE-0S2 925 567 beschrieben.

b) Solche Umsetzungsprodukte, denen außer den unter a) angegebenen Polyaminen noch zwei primäre und eine sekundäre Aminogruppe enthaltenden aliphatische, cycloaliphatische, araliphatische oder heterocyclische Polyamine, wie Ethylendiamin, 1,6-Diaminohexan, 1,4-Diaminocyclohexan, 1,2-Diaminopropan, 1,3-Bis-aminomethylbenzol bzw. Piperazin zu Grunde liegen, wobei die Verwendung der drei erstgenannten Polyamine bevorzugt ist.

c) Solche Umsetzungsprodukte, bei denen pro Mol Harnstoff bis 0,5 Mol polyalkylenpolyamine wie Diethylentriamin, Triethylentetramin und höhere Homologe sowie Dipropylentriamin, Tripropylentetramin und höhere Homologe neben den unter a) und b) genannten einkondensiert werden und an deren sekundäre Aminogruppen anschließend ungesättigte Verbindungen wie Acrylsäure, Maleinsäureanhydrid oder Acrylamid addiert werden.

Die Kondensationsreaktion zur Herstellung der Polyharnstoffamine wird vorzugsweise bei einem Molverhältnis von Polyamin zu Harnstoff von 1:1 ausgeführt, jedoch läßt sie sich auch bei einem Verhältnis von 1:0,7 bis 1:1,5 ausführen. Die Reaktionstemperatur kann von 120 bis 250°C variiert werden, vorzugsweise wird die Reaktion zwischen 140 und 190°C durchgeführt.

Das Mengenverhältnis der bifunktionellen Verbindung der Formel (I) zum polyamidamin und/oder polyharnstoffamin wird so bemessen, daß das zur Bildung des gewünschten Kondensationsgrades des erfindungsgemäßen wasserlöslichen Polymers nicht wesentlich überschritten wird.

Die Mindestmenge an bifunktioneller Verbindung der Formel (I), die anzuwenden ist, um die erfindungsgemäßen wasserlöslichen Polymere mit dem gewünschten Molekulargewicht (Molekulargewichtsbereich von ca. 2000 bis ca. 100 000, insbesondere von ca. 10 000 bis ca. 40 000) bzw. um Lösungen dieser Polymeren mit der angestrebten Viskosität von weniger als 100 mPa.s, vorzugsweise von 10-40 mPa.s einer 25 %igen wäßrigen Lösung zu erhalten, sind vom Molekulargewicht des als Ausgangsprodukts eingesetzten Polyamidamins oder Polyharnstoffamins abhängig. Das Molekulargewicht des vorgenannten Ausgangsprodukts beträgt im allgemeinen 2000-10000, insbesondere 4000-8000.

Die für die Erreichung des gewünschten Molekulargewichts des Endprodukts bzw. der gewünschten Viskosität der Lösung des Endprodukts notwendigen Mengen an Ausgangskomponenten lassen sich durch Vorversuche unter Anwendung viskosimetrischer Messungen von Fall zu Fall leicht feststellen.

Wichtig ist dabei, daß alle funktionellen Gruppen der Verbindungen abreagiert haben, so daß das Reaktionsprodukt praktisch frei von selbstvernetzenden Gruppen ist.

Die Herstellung der wasserlöslichen Polymere aus den Polyaminopolyamiden oder den Polyharnstoffaminen oder deren Gemischen und der polyfunktionellen Verbindung kann nach an sich bekannten Verfahren erfolgen, z.B. dadurch, daß man Mischungen der Komponenten in wäßrigen Medien bei pH-Werten über 6 und bei Temperaturen zwischen 0 und 140°C so lange rührt, bis die vorher durch Versuch ermittelte Menge polyfunktioneller Verbindung vollständig umgesetzt ist. Es kann von Vorteil sein, wenn die polyfunktionelle Verbindung unter sonst gleichen Reaktionsbedingungen portionsweise zugesetzt wird. Der Gehalt der Reaktionslösung an Einwirkungsprodukten, der vorzugsweise zwischen 10 und 30 Gewichtsprozent liegt, wird dann, falls die Reaktion bei einer höheren Konzentration durchgeführt wurde, durch Verdünnen mit Wasser auf den gewünschten Endwert eingestellt. Die Gesamtkonzentration der Komponenten in der wäßrigen Reaktionsmischung sollte 10 bis 50 insbesondere 10 bis 30 Gewichtsprozent betragen.

Die Kondensation kann auch in einem geschlossenen Gefäß bei Temperaturen oberhalb des Siedepunktes der bifunktionellen Verbindung (I), insbesondere bei Verwendung von Dihalogenalkanen, vorzugsweise zwischen 90 und 130°C bei Drucken von 0-50 bar, vorzugsweise 3-8 bar, durchgeführt werden.

Die erfindungsgemäß eingesetzten Polymere zeigen im Gegensatz zu herkömmlichen Krepphilfsmitteln keinerlei Naßverfestigungswirkung. Außerdem weisen sie eine gute Affinität zur Faser auf, so daß sie im Faserfließ angereichert auf den Trockenzylinder gelangen, weshalb sie sich besonders für den Einsatz in der Stoffsuspension eignen. Dadurch, daß diese Harze auch auf dem heißem Trockenzylinder ihre Klebrigkeit sowie ihre Schmiereigenschaften behalten, liefern die Harze eine besonders vorteilhafte und effektive Haftung am erhitzten Zylinder beim Kreppvorgang. Aus den genannten Gründen kann zudem die Einsatzmenge erheblich reduziert werden. Außerdem wird die Standzeit der Kreppmesser erhöht, weil das Hilfsmittel auch als Gleitmittel dient und keine harten Ablagerungen auf dem erhitzten Zylinder bildet.

Einige erfindungsgemäß verwendbare wasserlösliche Polymere sind nachstehend beschrieben.

Die Viskositäten wurden in einem Kugelfallviskosimeter bestimmt.

### I) Herstellung der polyamidamin- bzw. Polyharnstoffamin-Ausgangsprodukte

### Polyamidamin 1

Eine Mischung von 730 g Adipinsäure, 285 g ν -Caprolactam und 540 g Diethylentriamin wurde unter Rühren und Überleiten von Stickstoff auf 190°C erhitzt, wobei die Reaktionstemperatur im Bereich von 150 bis 190°C in der Weise erhöht wird, daß das entstehende Wasser gleichmäßig abdestilliert. Nach 3-4 Stunden wird das Reaktionsgemisch noch so lange unter vermindertem Druck (30 bis 80 mbar) gerührt, bis insgesamt 250 g Destillat angefallen sind. Dann wird auf 130°C abgekühlt und soviel Wasser zugesetzt, daß man eine 50 proz. Lösung mit den folgenden Eigenschaften erhält:

| | |
|---|---|
| Viskosität bei 25°C | 435 mPa.s |
| pH-Wert bei 25°C | 10,2 |
| Basenäquivalent | 420 |

### Polyamidamin 2

Eine Mischung aus 730 g Adipinsäure und 675 g N-[2-Aminoethyl]-piperazin wird 6 Std. unter Rühren und Stickstoff Überleiten auf 160°C erhitzt, wobei 140 g Wasser abdestillieren. Dann kühlt man auf 100°C ab und setzt soviel Wasser zu, daß man eine 50 proz. wäßrige Lösung mit den folgenden Eigenschaften erhält:

| | |
|---|---|
| Viskosität bei 25°C | 373 mPa.s |
| pH-Wert bei 25°C | 9.3 |
| Basenäquivalent | 375 |

### Polyamidamin 3

Wie vorstehend beschrieben werden 730 g Adipinsäure, 270 g Diethylentraimin und 338 g N-[2-Amino-ethyl]-piperazin unter Abspaltung von 132 g Wasser umgesetzt. Die 50 proz. wäßrige Lösung hat folgende Eigenschaften:

| | |
|---|---|
| Viskosität bei 25°C | 111 mpa.s |
| pH-Wert bei 25°C | 9,4 |
| Basenäquivalent | 346 |

### Polyamidamin 4

Eine Mischung aus 730 g Adipinsäure, 283 g ε -Caprolactam und 954 g Tetraethylenpentamin wird unter Rühren unter vermindertem Druck (30 bis 80 mbar) 6 Std. auf 150°C erhitzt. In dieser Zeit destillierten 145 g Wasser ab. In die zähe Reaktionsmasse werden 320 g 85 proz. Ameisensäure eingerührt und anschließend noch einmal 130 g Wasser unter vermindertem Druck bei 150°C abdestilliert. Dann kühlt man auf 100°C ab und setzt soviel Wasser zu, daß man eine 50 proz. wäßrige Lösung mit folgenden Eigenschaften erhält:

Viskosität bei 25°C   728 mPa.s
pH-Wert bei 25°C   9,9
Basenäquivalent   386

**Polyharnstoffamin 1**

Eine Mischung aus 725 g Methyl-bis-(3-aminoropyl)-amin und 300 g Harnstoff wird 3 Std unter Rühren und Überleiten von Stickstoff auf 190°C erhitzt. Dann kühlt man auf 100°C ab und setzt soviel Wasser zu, daß man eine 50 proz. wäßrige Lösung mit folgenden Eigenschaften erhält:

Viskosität bei 25°C   560 mPa.s
pH-Wert bei 25°C   12,5
Basenäquivalent   340

**II) Herstellung der wasserlöslichen Polymere**

IIa) Jeweils 500 g der gemäß der vorstehenden Beispiele erhaltenen 50 %igen wäßrigen Polyamidamin-Lösungen wurden nochmals mit je 375 g Wasser verdünnt und mit der im folgenden angegebenen Menge Dichlorethan 5 Stunden lang unter Rückfluß erhitzt. Anschließend wurde nach dem Abkühlen mit Wasser soweit verdünnt, bis eine 25-gewichtsprozentige Lösung des polymeren erreicht wurde.

Polyamidamin Gewichtsmenge Viskosität der bzw. Polyharnstoffamin 1,2-Dichlorethan 25-gewichtsprozentigen wäßrigen Lösung des Polymeren bei 25°C

| Bsp.-Nr. | Polyamidamin bzw. Polyharnstoffamin | Gewichtsmenge 1,2-Dichlorethan | Viskosität der 25-gewichtsprozentigen wäßrigen Lösung des Polymeren bei 25°C |
|---|---|---|---|
| 1 | 500 g Polyamidamin-lösung 1 | 8 g | 37 mPa.s |
| 2 | 500 g Polyamidamin-lösung 1 | 4 g | 30 mPa.s |
| 3 | 500 g Polyamidamin-lösung 2 | 15 g | 19 mPa.s |
| 4 | 500 g Polyamidamin-lösung 3 | 15 g | 10 mPa.s |
| 5 | 500 g Polyamidamin-lösung 4 | 8 g | 39 mPa.s |
| 6 | 500 g Polyamidamin-lösung 4 | 4 g | 34 mPa.s |
| 7 | 500 g Polyharnstoff-aminlösung 1 | 8 g | 18 mPa.s |

0 063 301

**IIb) Beispiel 18**

500 g der 50 prozentigen Polyharnstoffaminlösung 1 werden mit 375 g Wasser verdünnt und mit 9,0 g 1,3-Dichlorpropan 10 Stunden unter Rückfluß erhitzt. Anschließend wurde mit Wasser auf 25 % Feststoffgehalt eingestellt; die Viskosität dieser Lösung bei 25°C betrug 25 mPa.s

## III) Anwendungsbeispiele

Für den anwendungstechnischen Vergleich wurden die Eigenschaften eines getrockneten Polymerfilms bei 100°C beurteilt. Es wurde bei 100°C 15 Minuten lang getrocknet und nach dieser Behandlung die Härte des Films sowie die Klebrigkeit dieses Films beurteilt.

Als Vergleichsbeispiele wurden herangezogen:

A) Harzlösung gemäß Beispiel 1 der DE-OS 2 239 647. Die 10 %ige Lösung hatte bei 25°C eine Viskosität von 33 mPa.s.

B) Harzlösung gemäß Beispiel 3 der US-pS 3 640 841. Die 50 %ige Lösung hatte bei 25°C eine Viskosität von 91 mPa.s.

| Getrockneter Polymerfilm unter Einsatz von Bsp. Nr. | Härte des Films | Klebrigkeit |
|---|---|---|
| 1 | weich | gut |
| 2 | weich | gut |
| 3 | fest | gut |
| 4 | weich | gut |
| 5 | weich | gut |
| 6 | weich | gut |
| 7 | weich | sehr gut |
| 8 | weich | sehr gut |
| A | hart | fehlt |
| B | sehr weich | mäßig |

## Patentansprüche

1) Verwendung von wasserlöslichen Polymeren erhältlich durch Umsetzung eines gegebenenfalls durch Umsetzung mit Monocarbonsäure modifizierten Polyamidamins und/ oder polyharnstoffamins mit einer solchen Menge einer bifunktionellen Verbindung der Formel

$$X - Y - X' \qquad\qquad I$$

in welcher die Reste X und X' gleich oder verschieden sein können und für Halogen stehen und Y für gegebenenfalls durch O, S unterbrochenes Alkylen, Cycloalkylen, Arylenalkylen oder Alkylencarbonyl steht, daß die Endviskosität einer 25-prozentigen wäß-rigen Lösung des Kondensationsprodukts bei 25°C weniger als 100 mPa.s beträgt, als Haftverbesserungsmittel bei der Papierkreppung.

2) Verwendung von Polymeren nach Anspruch 1, dadurch gekennzeichnet, daß man Polyamidamine einsetzt, die durch Kondensation von Dicarbonsäuren und/oder ω-Aminocarbonsäuren oder deren Lactamen und Polyaminen erhalten werden.

3) Verwendung von Polymeren nach Anspruch 1, dadurch gekennzeichnet, daß man das Polyamidamin-Ausgangsprodukt mit einer solchen Menge Monocarbonsäure mit 1-4 Kohlenstoffatomen umgesetzt hat, daß wasserlösliche Polykondensate erhalten werden.

4) Verwendung von Polymeren nach Anspruch 1, dadurch gekennzeichnet, daß man Umsetzungsprodukte aus Harnstoff und Methyl-bis-(3-aminopropyl)-amin oder N-(2-Aminoethyl)-piperazin oder Gemische dieser Amine einsetzt.

5) Verwendung von Polymeren nach Anspruch 1, dadurch gekennzeichnet, daß man Polyharnstoffe aus Ethylendiamin, 1,6-Diaminohexan, 1,4-Diaminocyclohexan oder Gemischen dieser Amine im Gemisch mit Polyaminen gemäß Anspruch 4 und Harnstoff kondensiert.

6) Verwendung von Polymeren gemäß Anspruch 1, dadurch gekennzeichnet, daß X und X' für Chlor steht.

7) Verwendung von Polymeren gemäß Anspruch 1, dadurch gekennzeichnet, daß X-Y-X' für 1,2-Dichlorethan steht.

8) Verwendung von Polymeren gemäß Anspruch 1, dadurch gekennzeichnet, daß die Endviskosität einer 25 %igen wäßrigen Lösung des Kondensationsprodukts bei 25°C 10-40 mPa.s beträgt.

## 0 063 301

### Claims

1. Use of water-soluble polymers obtainable by reacting a polyurea amine and/or polyamide amine optionally modified by a reaction with a mdnocarboxylic acid with such a quantity of a bifunctional compound of the formula

$$X - r - X' \qquad \qquad I$$

in which the radicals X and X' can be identical or different and represent halogen and
Y represents alkylene, cycloalkylene, arylenealkylene or alkylenecarbonyl, optionally interrupted by 0 or S, that the final viscosity of a 25 per cent aqueous solution of the condensation product at 25°C is less than 100 mPa.s, as adhesion-improving agents in paper-crêping.

2. Use of polymers according to Claim 1, characterised in that polyamide amines are used which are obtained by condensing dicarboxylic acids and/or $\mu$-aminocarboxylic acids or their lactams and polyamines.

3. Use of polymers according to Claim 1, characterised in that the polyamide amine starting product has been reacted with such a quantity of a monocarboxylic acid with 1-4 carbon atoms that watersoluble polycondensates are obtained.

4. Use of polymers according to Claim 1, characterised in that reaction products of urea and methyl-bis-(3-aminopropyl)-amine or N-(2-aminoethyl)-piperazine or mixtures of these amines are used.

5. Use of polymers according to Claim 1, characterised in that that polyureas are obtained by condensation of ethylenediamine, 1,6-diaminohexane, 1,4-diaminocyclohexane or mixtures of these amines in admixture with polyamines according to Claim 4 and urea.

6. Use of polymers according to Claim 1, characterised in that X and X' represent chlorine.

7. Use of polymers according to Claim 1, characterised in that X-r-X' represents 1,2-dichloroethane.

8. Use of polymers according to Claim 1, characterised in that the final viscosity of a 25% aqueous solution of the condensation product at 25°C is 10-40 mPa.s.

### Revendications

1. Utilisation de polymères hydrosolubles pouvant être obtenus par réaction d'une polyamide-amine et/ou d'une polyurée-amine éventuellement modifiées par réaction avec un acide monocarboxylique, avec une quantité d'un composé bifonctionnel de formule

$$X - Y - X' \qquad \qquad (I)$$

dans laquelle les restes X et X' peuvent être égaux ou différents et représentent un halogène et Y est un groupe alkylène, cyclo-alkylène, arylène-alkylène ou alkylènecarbonyle éventuellement substitué par O, S, choisie de manière que la viscosité finale d'une solution aqueuse à 25 % du produit de condensation à 25°C s'élève à moins de 100 mPa.s, comme agent améliorant l'adhésivité dans le crépage du papier.

2. Utilisation de polymères suivant la revendication 1, caractérisée en ce qu'on utilise des polyamide; amines qui sont obtenues par condensation d'acides dicarboxyliques et/ou d'acides ω-aminocarboxyliques ou de leurs lactames et de polyamines.

3. Utilisation de polymères suivant la revendication 1, caractérisée en ce qu'on a fait réagir la polyamide-amine de départ avec une quantité d'acide monocarboxylique ayant 1 à 4 atomes de carbone choisie de manière à obtenir des polycondensats hydrosolubles.

4. Utilisation de polymères suivant la revendication 1, caractérisée en ce qu'on utilise des produits de réaction de l'urée et de la méthyl-bis(3-aminopropyl)-amine ou de la N-(2-aminoéthyl)-pipérazine ou des mélanges de ces amines.

5. Utilisation de polymères suivant la revendication 1, caractérisée en ce qu'on condense des polyurées obtenues à partir d'éthylenediamine, de 1,6-diaminohexane, de 1,4-diaminocyclohexane ou de mélange de ces amines, en mélange avec des polyamines suivant la revendication 4 et de l'urée.

6. Utilisation de polymères suivant la revendication 1, caractérisée en ce que X et X' représentent du chlore.

7. Utilisation de polymères suivant la revendication 1, caractérisée en ce que X-Y-X' représente le 1,2-dichloréthane.

8. Utilisation de polymères suivant la revendication 1, caractérisée en ce que la viscosité finale d'une solution aqueuse à 25 % du produit de condensation à 25°C s'élève à 10-40 mPa.s.